# EUROPEAN PATENT SPECIFICATION

(11) **EP 3 992 047 B1**
(45) Date of publication and mention of the grant of the patent: **09.04.2025**
(21) Application number: 20835031.4
(22) Date of filing: 30.06.2020
(51) Int. Cl.: B60W 30/18, B60W 10/18, B60W 10/06, B60W 50/08, B60W 50/10

(54) **BRAKING CONTROL METHOD AND SYSTEM AND VEHICLE**
BREMSSTEUERUNGSVERFAHREN UND -SYSTEM UND FAHRZEUG
PROCÉDÉ ET SYSTÈME DE COMMANDE DE FREINAGE ET VÉHICULE

(30) Priority: 01.07.2019 CN 201910584320
(43) Date of publication of application: 04.05.2022
(73) Proprietor: Great Wall Motor Company Limited, Baoding, Hebei 071000 (CN)
(72) Inventor: ZHANG, Shuai, Baoding, Hebei 071000 (CN); LIU, Xiu, Baoding, Hebei 071000 (CN); CHEN, Shujiang, Baoding, Hebei 071000 (CN); HOU, Wentao, Baoding, Hebei 071000 (CN)
(74) Representative: dompatent von Kreisler Selting Werner - Partnerschaft von Patent- und Rechtsanwälten mbB
(86) International application number: PCT/CN2020/099223
(87) International publication number: WO 2021/000853

(56) References cited:
- WO-A1-2013/000042
- CN-A- 103 057 539
- CN-A- 104 828 073
- CN-A- 107 199 893
- CN-A- 108 297 860
- US-A1- 2010 292 888
- US-A1- 2011 295 468
- US-A1- 2013 238 216
- US-A1- 2013 296 105
- US-A1- 2014 330 472

## Description

### CROSS-REFERENCES TO RELATED APPLICATIONS

The present invention claims priority to the Chinese Patent Application No. 201910584320.9, filed to the Chinese Patent Office on July 1, 2019, and entitled "Braking control method and system and vehicle".

### TECHNICAL FILED

The invention relates to the technical field of vehicles, in particular to a braking control method and system and a vehicle.

### BACKGROUND

Along with the high-speed development of the vehicle technology, the demands of users for the safety and the comfort of vehicles are getting higher and higher.

Most of existing vehicles use a brake override system (BOS) in order to improve driving safety. When a vehicle is running normally but an emergency happens, stepping on or jamming on a brake pedal may make an engine of the vehicle get into an idle state, no matter which state an acceleration pedal is in. Meanwhile, a braking system of the vehicle starts to work, so as to achieve the fastest braking effect. However, the control strategy of the BOS is that drive torque of the engine is directly cleared after the brake pedal is stepped on or jammed on, so there will be a problem that the sudden power interruption after the brake pedal is stepping on or jammed on may cause a poor driving experience.

US 20110295468A1 discloses a method for controlling a vehicle having a powertrain, which may include an internal combustion engine, including detecting a first condition when a brake input and an accelerator input occur simultaneously, determining a magnitude of the brake input, and commanding the engine to decrease output in accordance with the magnitude of the brake input in response to the first condition. In one embodiment, the brake input includes: a lower range in which powertrain output is reduced in relation to the brake pedal input and the brakes are substantially prevented from being actuated and a higher range in which the engine output is reduced and the brakes are actuated. In one embodiment, the output of the powertrain is decreased independently of accelerator pedal input.

### SUMMARY

**By** this, the present invention aims at providing a braking control method and system and a vehicle, so as to solve the problem of poor driving experience caused by sudden power interruption after a brake pedal is stepped on or jammed on in a current brake override system. The inventions is defined by the features of independent claims 1 and 5.

In order to achieve one of the above objectives, the technical solution of the present invention is achieved as follows:
a braking control method, comprises:
acquiring a current acceleration parameter, a current braking parameter and a current braking mode, wherein the corresponding relation between a braking parameter and an acceleration coefficient is preset in a braking mode;
determining a target acceleration coefficient corresponding to the current braking parameter according to the current braking mode;
generating a target acceleration parameter according to the target acceleration coefficient and the current acceleration parameter; and
controlling drive torque outputted by an engine according to the target acceleration parameter.

Furthermore, the corresponding relation between the braking parameter and the acceleration coefficient, comprises:
the acceleration coefficient is 1 when the braking parameter is less than or equal to a first preset braking threshold value;
the acceleration coefficient and the braking parameter are in a negative correlation when the braking parameter is greater than the first preset braking threshold value and less than a second preset braking threshold value, wherein the first preset braking threshold value is less than the second preset braking threshold value; and
the acceleration coefficient is 0 when the braking parameter is greater than or equal to the second preset braking threshold value.

Furthermore, the step of acquiring the current acceleration parameter, the current braking parameter and the current braking mode, comprises:
acquiring the current acceleration parameter and the current braking parameter;
determining a current driving state according to the current acceleration parameter and the current braking parameter; and
acquiring the current braking mode corresponding to the current driving state according to the current driving state.

Furthermore, the acceleration parameter comprises at least one of an acceleration pedal opening degree and an engine rotating speed; and
the braking parameter comprises at least one of a brake pedal opening degree and a brake master cylinder pressure value.

Furthermore, the step of generating the target acceleration parameter according to the target acceleration coefficient and the current acceleration parameter, comprises:
generating the target acceleration parameter according to a product of the target acceleration coefficient and the current acceleration parameter.

Compared with the prior art, the braking control method according to the present invention has the following advantages:
in the braking control method, the target acceleration coefficient corresponding to the current braking parameter can be determined according to the current braking mode as the corresponding relation between the braking parameter and the acceleration coefficient is preset in the braking mode; and according to the target acceleration coefficient and the current acceleration parameter, the target acceleration parameter is generated, the drive torque outputted by the engine is controlled according to the target acceleration coefficient and the current acceleration parameter, thus, the drive torque outputted by the engine can be controlled according to the current braking mode and the braking parameter, which prevents the problem of sudden power interruption caused by the direct clearing of the drive torque of the engine after the brake pedal is stepped on or jammed on, thereby effectively improving the driving experience.

One of another objectives of the present invention is to provide a braking control system, so as to solve the problem of poor driving experience caused by sudden power interruption after a brake pedal is stepped on or jammed on in a current BOS.

In order to achieve one of the above objectives, the technical solution is achieved as follows:
a braking control system, comprises:
**an** acquiring module, configured to acquire a current acceleration parameter, a current braking parameter and a current braking mode, wherein the corresponding relation between a braking parameter and an acceleration coefficient is preset in a braking mode;
a searching module, configured to determine a target acceleration coefficient corresponding to the current braking parameter according to the current braking mode;
a generating module, configured to generate a target acceleration parameter according to the target acceleration coefficient and the current acceleration parameter; and
a control module, configured to control drive torque outputted by an engine according to the target acceleration parameter.

Furthermore, the corresponding relation between the braking parameter and the acceleration coefficient, comprises:
the acceleration coefficient is 1 when the braking parameter is less than or equal to a first preset braking threshold value;
the acceleration coefficient and the braking parameter are in a negative correlation when the braking parameter is greater than the first preset braking threshold value and less than a second preset braking threshold value, wherein the first preset braking threshold value is less than the second preset braking threshold value; and
the acceleration coefficient is 0 when the braking parameter is greater than or equal to the second preset braking threshold value.

Furthermore, the acquiring module comprises:
a first acquiring module, configured to acquire the current acceleration parameter and the current braking parameter;
a first searching module, configured to determine a current driving state according to the current acceleration parameter and the current braking parameter; and
a second acquiring module, configured to acquire the current braking mode corresponding to the current driving state according to the current driving state.

Furthermore, the acceleration parameter comprises at least one of an acceleration pedal opening degree and an engine rotating speed; and
the braking parameter comprises at least one of a brake pedal opening degree and a brake master cylinder pressure value.

The braking control system and the braking control method have the same advantages compared with the prior art, and repetitions are omitted here.

One of another objectives of the present invention aims at providing a vehicle, so as to solve the problem of poor driving experience caused by sudden power interruption after a brake pedal is stepped on or jammed on in a current BOS in an existing vehicle.

**In** order to achieve one of the above objectives, the technical solution is achieved as follows:
A vehicle, comprises the braking control system.

The vehicle and the braking control system have the same advantages compared with the prior art, and repetitions are omitted here.

The above description is only the overview of the technical solutions of the present invention, implementation can be performed according to the content of the specification in order to more clearly understand the technical means of the present invention, and specific implementations are listed below in order to make one of the above and other objectives, features and advantages of the present invention more obvious and understandable.

### BRIEF DESCRIPTION OF THE DRAWINGS

In order to more clearly illustrate embodiments of the present invention or technical solutions in the prior art, accompanying drawings needed in description of the embodiments or the prior art will be simply introduced below, obviously, the drawings in the description below are some embodiments of the invention, and those ordinarily skilled in the art can obtain other drawings according to these drawings without involving creative labor.
FIG. 1 is a flow chart of steps of a braking control method in an embodiment of the invention;
FIG. 2 is a schematic diagram of a braking mode in an embodiment of the invention;
FIG. 3 is a flow chart of steps of another braking control method in an embodiment of the invention;
FIG. 4 is a structural block diagram of a braking control system in an embodiment of the invention;
FIG. 5 schematically shows a block diagram of a computing device for executing a method according to the invention; and
FIG. 6 schematically shows a storage unit for keeping or carrying program codes for achieving a method according to the invention.

### DETAILED DESCRIPTION

To make the objectives, technical solutions, and advantages of the embodiments of the present invention clearer, the following clearly and completely describes the technical solutions in the embodiments of the invention with reference to the accompany drawings in the embodiments of the invention. Obviously, the descried embodiments are part, not all of the embodiments of the invention. Based on the embodiments in the invention, all other embodiments obtained by those ordinarily skilled in the art without involving creative labor belong to the protection scope of the invention.

It should be noted that the embodiments in the present invention and features in the embodiments may be mutually combined in the absence of conflicts.

The invention may be illustrated in details below with reference to the drawings and the embodiments.

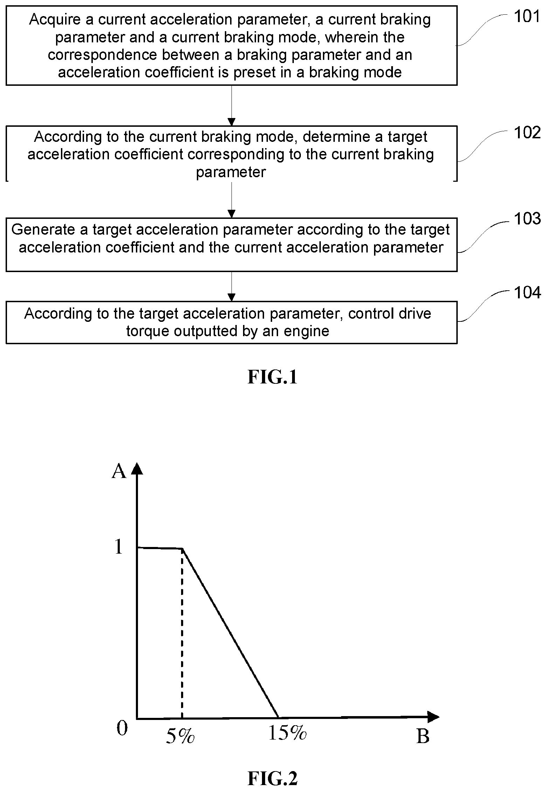

Referring to FIG. 1, an embodiment of the invention provides a flow chart of steps of a braking control method, and the method specifically may comprise:
Step 101, acquiring a current acceleration parameter, a current braking parameter and a current braking mode, wherein a corresponding relation between a braking parameter and an acceleration coefficient is preset in a braking mode.

The acceleration parameter in the embodiment of the invention is a parameter capable of reflecting the acceleration or driving speed of a vehicle, and specifically may comprise at least one of an acceleration pedal opening degree and an engine rotating speed. The acceleration parameter also may be other parameter values capable of reflecting the acceleration of the vehicle, the embodiment of the invention is illustrated only by taking the acceleration parameter as the acceleration pedal opening degree, and when the acceleration parameter is other parameter values, please refer to the above operation.

The braking parameter in the embodiment of the invention is a parameter capable of reflecting braking or speed attenuation of the vehicle, and it may specifically comprise at least one of a brake pedal opening degree, a brake master cylinder pressure value and a brake torque value. The braking parameter may also be other parameter values capable of reflecting braking or speed attenuation of the vehicle, the embodiment of the invention is illustrated only by taking the braking parameter as the brake pedal opening degree, and when the braking parameter is other parameter values, please refer to the above operation.

The braking mode in the embodiment of the invention may represent a current braking rate of the vehicle, and for each of a plurality of braking modes, a corresponding relation between different braking parameters and different acceleration parameters are preset.

In the embodiment of the invention, the acceleration coefficient may reflect an attenuation rate of the acceleration parameter of the vehicle, and when the acceleration parameter is the acceleration pedal opening degree and the braking parameter is the brake pedal opening degree, the acceleration coefficient reflects the attenuation rate of the acceleration pedal opening degree.

In practical application, there may be a plurality of braking modes in order to be matched with different driving states of the vehicle. For example, the braking mode during emergency braking is an emergency braking mode, the braking mode corresponding to acceleration pedal failure is a braking failure mode, and the braking mode corresponding to mistaken stepping of the acceleration pedal is a mistaken stepping braking mode. Specifically, the corresponding relation between the braking parameters and the acceleration coefficients are preset in each of the braking modes, wherein the corresponding relations between the braking parameters and the acceleration parameters preset in different braking modes may be identical or different. It should be noted that each of the braking modes is set after being verified through a large quantity of vehicle safety experiments.

Optionally, as the corresponding relation between the braking parameters and the acceleration coefficients is preset in the braking mode, the corresponding relation between the braking parameters and the acceleration coefficients may specifically comprise:
the acceleration coefficient is 1 when the braking parameter is less than or equal to a first preset braking threshold value;
**the** acceleration coefficient and the braking parameter are in a negative correlation when the braking parameter is greater than the first preset braking threshold value and less than a second preset braking threshold value, wherein the first preset braking threshold value is less than the second preset braking threshold value; and
the acceleration coefficient is 0 when the braking parameter is greater than or equal to the second preset braking threshold value.

In practical application, the first preset braking threshold value and the second preset braking threshold value are quantifiers capable of being calibrated, which the first preset braking threshold value and the second preset braking threshold value may be adaptively calibrated according to different demands. For example, when the braking mode is the emergency braking mode, the first preset braking threshold value may be calibrated at 5%, and the second preset braking threshold value may be calibrated at 15%; when the braking mode is the braking failure mode, the first preset braking threshold value may be calibrated at 8%, and the second preset braking threshold value may be calibrated at 85% in order to control the speed of the vehicle according to the brake pedal opening degree; and when the braking mode is the mistaken stepping braking mode, the first preset braking threshold value may be calibrated at 3%, and the second preset braking threshold value may be calibrated at 10% in order to prevent harms of mistaken stepping to people or the vehicle, and increase the vehicle safety coefficient. It is understandable that the first preset braking threshold value and the second preset braking threshold value in each of the braking modes are both set by the vehicle ex-factory parameter, according to the vehicle safety inspection standard, and the threshold values cannot be changed at will after the vehicle leaves the factory.

In addition, when the braking parameter is greater than the first preset braking threshold value and less than the second preset braking threshold value, the acceleration parameter and the braking parameter are in a negative correlation, that is, the acceleration coefficient decreases along with the increase of the braking parameter. The acceleration coefficient and the braking parameter may be in linear change according to a preset proportion, and may also be in curve change of exponents or logarithms, and the specific change curve is not limited in the embodiment of the invention.

In practical application, the corresponding relation between the acceleration coefficient and the braking parameter is usually preset through the following method: acquiring a plurality of braking parameters between the first preset braking threshold value and the second preset braking threshold value, calibrating acceleration coefficients corresponding to the plurality of braking parameters through a calibration method, and calculating the non-calibrated braking parameters through an interpolation method. In the embodiment of the invention, the acceleration coefficients corresponding to the plurality of braking parameters calibrated through the calibration method are verified by the vehicle safety. It is understandable that more braking parameters obtained through calibration method means more accurate for the values of the acceleration coefficients corresponding to the braking parameters, and the coefficient for the vehicle safety is higher.

Referring to FIG. 2, a schematic diagram of a braking mode in an embodiment of the invention is shown. As shown in FIG. 2, A represents an acceleration coefficient, B represents a brake pedal opening degree, a first preset braking threshold value is 5%, and a second preset braking threshold value is 15%. When the brake pedal opening degree is less than or equal to 5%, the acceleration coefficient is 1; when the brake pedal opening degree is greater than 5% and less than 15%, the acceleration coefficient and a braking parameter are in a negative correlation, specifically, the acceleration coefficient is equal to 1/(5%-15%) * braking parameter + 1.5; and when the brake pedal opening degree is greater than or equal to 15%, the acceleration coefficient is 0.

Specifically, when a vehicle is running normally, if an emergency happens (such as acceleration pedal failure or acceleration verification system breakdown, etc.) and requires emergency braking, the next move of the vehicle may be further determined by obtaining a current acceleration parameter, a current braking parameter and a current braking mode.

The acceleration parameter and the braking parameter in the embodiment of the invention may be detected through corresponding sensors disposed in the vehicle. For example, the acceleration pedal opening degree sensor and the brake pedal opening degree sensor may be disposed, to directly acquire the acceleration parameter and the braking parameter, through the acceleration pedal opening degree sensor and the braking pedal opening degree sensor, or the acceleration pedal opening degree sensor and the braking pedal opening degree sensor may be connected with a central control system of the vehicle, and the corresponding parameters may be acquired through the central control system of the vehicle. The specific acquisition manner of the above parameters is not limited in the embodiment of the invention.

Step 102, determining a target acceleration coefficient corresponding to the current braking parameter according to the current braking mode.

In the embodiment of the invention, as the corresponding relation between a braking parameter and an acceleration parameter is preset in each of the braking modes, the preset corresponding relation between the braking parameter and the acceleration parameter in the braking mode may be determined according to the current braking mode, and then the acceleration coefficient corresponding to the current braking parameter may be determined as the target acceleration coefficient according to the current braking parameter.

Assuming that the current braking mode is the braking mode shown in FIG. 2, the target acceleration coefficient and the braking mode are in a linear transformation when the brake pedal opening degree is greater than 5% and less than 15% in the braking mode, specifically, the corresponding target acceleration coefficient is 0.5 when the current brake pedal opening degree is 10%; and the corresponding target acceleration coefficient is 0.3 when the current brake pedal opening degree is 12%. In practical application, the opening degree of the brake pedal may change from small to big when a driver steps on or jams on the brake pedal, and the acceleration coefficient corresponding to the opening degree of the brake pedal may also gradually change from 1 to 0. The processes are for taking as an example of the aforementioned embodiment.

Step 103, generating a target acceleration parameter according to the target acceleration coefficient and the current acceleration parameter.

In the embodiment of the invention, a target acceleration parameter may be generated through calculation according to the target acceleration coefficient and the current acceleration parameters after the target acceleration coefficient and the current acceleration parameter are acquired. In practical application, a target acceleration pedal opening degree is generated through calculation according to the target acceleration coefficient and a current acceleration pedal opening degree.

Step 104, controlling the drive torque outputted by an engine according to the target acceleration parameter.

In the embodiment of the invention, after the target acceleration parameter is generated, the drive torque outputted by the engine may be controlled according to the target acceleration parameter, so that the drive torque outputted by the engine starts to be adjusted, thereby controlling the vehicle speed.

In practical application, the current acceleration pedal opening degree, the current brake pedal opening degree and the current braking mode are acquired, as the corresponding relation between the brake pedal opening degree and the acceleration coefficient is preset in the braking mode, the target acceleration coefficient corresponding to the current brake pedal opening degree may be determined according to the acquired current braking mode, the target acceleration pedal opening degree is generated according to the target acceleration coefficient and the current acceleration pedal opening degree, and the drive torque outputted by the engine is controlled according to the target acceleration pedal opening degree. If the brake pedal opening degree changes from small to big, the acceleration coefficient corresponding to the brake pedal opening degree is gradually reduced from 1 to 0, the generated target acceleration pedal opening degree is gradually reduced, and to achieve that the drive torque outputted by the engine is controlled to be reduced at final, that is, in the embodiment of the invention, the technical effect of controlling the driving speed of the vehicle may be achieved by stepping on or jamming on the brake pedal, which prevents the problem of poor driving experience, caused by a sudden power interruption brought by the direct clearing, of the drive torque outputted from the engine, after the brake pedal is stepped on or jammed on in a current BOS, thereby effectively improving the driving experience.

According to the braking control method provided by the embodiment of the invention, as the corresponding relation between the braking parameter and the acceleration coefficient is preset in the braking mode, the target acceleration coefficient corresponding to the current braking parameter may be determined according to the current braking mode; and the target acceleration parameter is generated according to the target acceleration coefficient and the current acceleration parameter, the drive torque outputted by the engine is controlled according to the target acceleration coefficient and the current acceleration parameter, thus, the drive torque outputted by the engine may be controlled according to the current braking mode and the braking parameter, which prevents the problem of a sudden power interruption brought by the direct clearing of the drive torque outputted from the engine, after the brake pedal is stepped on or jammed on, thereby effectively improving the driving experience.

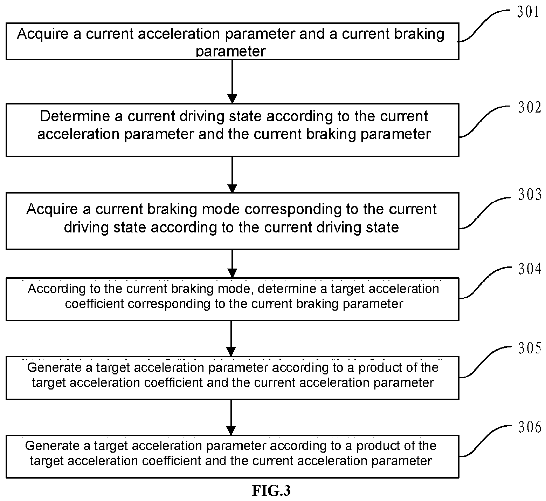

Referring to FIG. 3, another braking control method in an embodiment of the invention is shown, comprising:
Step 301, acquiring a current acceleration parameter and a current braking parameter.

The acceleration parameter and the braking parameter in the embodiment of the invention may be detected through corresponding sensors disposed in a vehicle. For example, the acceleration pedal opening degree sensor and the brake pedal opening degree sensor may be disposed to directly acquire the acceleration parameter and the braking parameter , through the acceleration pedal opening degree sensor and the braking pedal opening degree sensor, or, the acceleration pedal opening degree sensor and the braking pedal opening degree sensor may be connected with a central control system of the vehicle, the corresponding parameters are acquired through the central control system of the vehicle, and the specific acquisition manner of the above parameters is not limited in the embodiment of the invention.

Optionally, before the step of acquiring the current acceleration parameter and the current braking parameter, in the method, it is also capable to detect whether a user triggers a start operation or not . For example, when the user does not trigger the start operation, the vehicle is braked based on a brake override strategy, after the user triggers the start operation, the vehicle starts a braking mode acquiring the current acceleration parameter and the current braking parameter, and therefore to achieve different braking control effects.

Step 302, determining a current driving state according to the current acceleration parameter and the current braking parameter.

In practical application, as the current driving state of the vehicle may be reflected to a certain degree according to the current acceleration parameter and the current braking parameter, the current driving state may be determined according to the current acceleration parameter and the current braking parameter. For example, when the vehicle is running under normal circumstances and the acceleration parameter is not 0, the braking parameter corresponding to the acceleration parameter may be 0, or when the acceleration parameter is 0, the braking parameter corresponding to the acceleration parameter may not be 0. Taking an acceleration pedal opening degree being the acceleration parameter and a brake pedal opening degree being the braking parameter as an example, an acceleration pedal and a brake pedal may not be stepped on or jammed on under normal circumstances at the same time, in another word, the value for one of the acceleration pedal opening degree and the brake pedal opening degree must be 0 when the vehicle is running normally.

In the embodiment of the invention, if the current acceleration parameter and the current braking parameter are acquired to be greater than 0 at the same time, the current driving state may be determined as a vehicle abnormal state according to the current acceleration parameter and the current braking parameter, it is understandable that one of the circumstances is mis-operation of a driver (for example, the acceleration pedal and the brake pedal are stepped on or jammed on at the same time in a training process of a driving school student), or the circumstance may be acceleration pedal failure (cable accelerator breakdown, intensive jacking of an accelerator pull rod, etc.), and so forth. Or, if it is acquired that an engine rotating speed is increasing under the control of a gearbox and meanwhile the brake pedal opening degree is reduced, the current driving state may be determined as an ejection starting state at the moment.

**If,** at the same time, the acquired current acceleration parameter is 0 and the acquired current braking parameter is not 0, it means that the vehicle is braking normally. If the acquired current acceleration parameter is not 0 and the acquired current braking parameter is 0, it means that the vehicle is accelerating normally or running at a constant speed. In the embodiment of the invention, the braking control method only by taking the abnormal driving state of the vehicle as an example, the situation of the vehicle is running or braking normally may refer to the above example as well.

Optionally, when the current driving state is determined as the vehicle abnormal state according to the current acceleration parameter and the current braking parameter, other performance parameters (such as continuous braking time, continuous acceleration time, acceleration parameter change, etc.) of the vehicle may be acquired for further precisely judging whether the vehicle abnormal state is specifically acceleration pedal mistaken stepping or acceleration pedal failure, and then different braking steps may be adopted according to the further judged state of the vehicle in the follow-up process, so as to achieve the effects of more precise vehicle control and safe driving.

The embodiment of the invention judges and determines different driving states only through simple examples of the current acceleration parameter and the current braking parameter, and it is understandable that in practical application, other vehicle performance parameters and judgment conditions may also be available besides the current acceleration parameter and the current braking parameter, thereby determining the current driving state more precisely and rapidly.

Step 303, acquiring a current braking mode corresponding to the current driving state according to the current driving state.

In the embodiment of the invention, different braking modes corresponding to different driving modes may be set, so that different braking modes are adopted according to the driving states to achieve different braking effects. For example, when the current driving state is the vehicle abnormal state, the corresponding braking mode may be set as a rapid/emergency braking mode, the vehicle is braked within a short time, and the vehicle speed is reduced to 0, so that the safety of the driver and passengers is guaranteed; and when the current driving state is in the ejection starting state, the corresponding braking mode may be set as a low-speed braking mode, and the acceleration parameter of the vehicle may be controlled to be increased when the brake pedal opening degree is not 0 yet, so that the technical effect that the vehicle is started at a higher speed is achieved.

In practical application, when the braking mode is in the rapid/emergency braking mode, the braking parameter may be set as the brake pedal opening degree, a first preset braking threshold value is 5%, a second preset braking threshold value is 15%, that is, a corresponding acceleration coefficient is 1 when the brake pedal opening degree is less than or equal to 5%; and when the brake pedal opening degree is greater than 5% and less than 15%, the acceleration coefficient may be equal to 1/(5%-15%) * braking parameter + 1.5 according to linear change shown in FIG. 2; and the acceleration coefficient is 0 when the brake pedal opening degree is greater than or equal to 15%. That is, when the braking mode is in the rapid/emergency braking mode, the brake pedal opening degree is increased from 0 to be greater than 5%, the acceleration coefficient is always 1, the acceleration coefficient is reduced according to the gradient shown in FIG. 2, once the brake pedal opening degree is within the range from 5% to 15%, the acceleration coefficient is reduced to 0 when the brake pedal opening degree is greater than or equal to 15%, and the acceleration coefficient corresponding to the brake pedal opening degree is always 0 no matter how the brake pedal opening degree is increased, the acceleration coefficient may not change to achieve the effect of rapidly braking the vehicle.

When the braking mode is the low-speed braking mode, the corresponding acceleration coefficient may be set at 1 when the brake pedal opening degree is less than or equal to 10%; the acceleration coefficient is 0.9 when the brake pedal opening degree is greater than 10% and less than 90%; and the acceleration coefficient is 0 when the brake pedal opening degree is greater than or equal to 90%. That is, when the braking mode is the low-speed braking mode or the ejection starting mode, during the process of the brake pedal opening degree gradually reducing to 0 from 100%, the acceleration coefficient is increased to 0.9 from 0 once the brake pedal opening degree is reduced to be less than 90% from 100%, the acceleration coefficient is 1 once the brake pedal opening degree is less than or equal to 10%, and the acceleration coefficient is gradually increased. When the vehicle is in the braking mode, the increasing acceleration coefficient may lead the vehicle to start with a certain speed, and may shorten the acceleration time during the whole start.

It is understandable that the first preset braking threshold value and the second preset braking threshold value are only schematically set to illustrate the braking control principle. In practical application, the first preset braking threshold value and the second preset braking threshold value are both set after the vehicle is verified by the safety experiments.

Step 304, determining a target acceleration coefficient corresponding to the current braking parameter according to the current braking mode.

In practical application, when the vehicle running normally needs to be emergently braked in an emergency, or the vehicle is in the vehicle abnormal state such as acceleration pedal failure, the target acceleration coefficient corresponding to the current braking parameter can be determined in the braking mode when the acceleration pedal opening degree changes bigger from 0 after the driver steps on or jams on the brake pedal.

For example, the corresponding acceleration coefficient is reduced to 0.33 from 1 and then reduced to 0 when the first preset braking threshold value is 5% and the second preset braking threshold value is 15%, and specifically the acceleration coefficient is 1 when the current brake pedal opening degree is acquired to be less than or equal to 5%; the acceleration coefficient is equal to 1/(5%-15%) * braking parameter + 1.5 when it is acquired that the current brake pedal opening degree is within the range from 5% to 15%, and the acceleration coefficient is reduced along with increase of the braking parameter; and the acceleration coefficient is 0 when the brake pedal opening degree is greater than or equal to 15%.

Step 305, generating a target acceleration parameter according to a product of the target acceleration coefficient and the current acceleration parameter.

In the embodiment of the invention, after the target acceleration coefficient and the current acceleration parameter are acquired, the target acceleration parameter may be generated according to the product of the target acceleration coefficient and the current acceleration parameter. Specifically, when the target acceleration parameter is the acceleration pedal opening degree, a target acceleration pedal opening degree is generated according to a product of the target acceleration coefficient and the current acceleration pedal opening degree; and when the target acceleration parameter is an engine rotating speed, a target engine rotating speed is generated according to a product of the target acceleration coefficient and a current engine rotating speed.

Optionally, an attenuation coefficient may be set according to the practical condition, and the target acceleration parameter is generated according to a product of the target acceleration coefficient, the attenuation coefficient and the current acceleration parameter, thereby enabling the target acceleration parameter to be closer to the practical driving demand of the vehicle.

Step 306, controlling drive torque outputted by an engine according to the target acceleration parameter.

In practical application, after the target acceleration parameter is generated, the drive torque outputted by the engine may be controlled according to the target acceleration parameter to achieve the controlling of the driving speed of the vehicle. As controlling by the target acceleration parameter, the drive torque outputted from the engine is the same as the conventional technology, which the invention may not repeat here.

Based on the above, according to the braking control method provided by the embodiment of the invention, as the corresponding relation between the braking parameter and the acceleration coefficient is preset in the braking mode, the target acceleration coefficient corresponding to the current braking parameter can be determined according to the current braking mode; and the target acceleration parameter is generated according to the target acceleration coefficient and the current acceleration parameter, the drive torque outputted by the engine is controlled according to the target acceleration coefficient and the current acceleration parameter, and the drive torque outputted by the engine can be controlled according to the current braking mode and the braking parameter, which prevents the problem of poor driving experience caused by sudden power interruption caused by the direct clearing of the drive torque of the engine after the brake pedal is stepped on or jammed on, thereby effectively improving the driving experience.

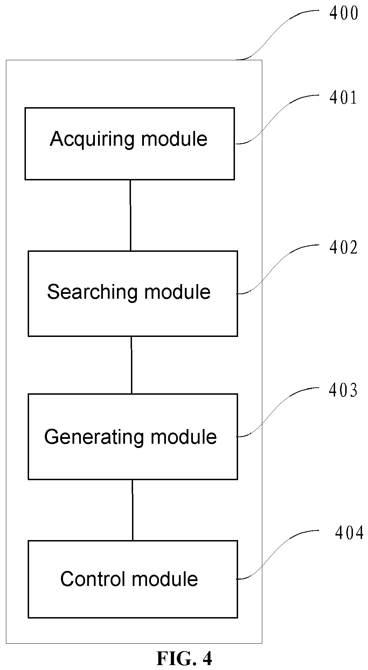

Referring to FIG. 4, a structural block diagram of a braking control system in an embodiment of the invention is shown, and the braking control system 400 specifically may comprise:
an acquiring module 401, configured to acquire a current acceleration parameter, a current braking parameter and a current braking mode, wherein the corresponding relation between a braking parameter and an acceleration coefficient is preset in a braking mode;
a searching module 402, configured to determine a target acceleration coefficient corresponding to the current braking parameter according to the current braking mode;
a generating module 403, configured to generate a target acceleration parameter according to the target acceleration coefficient and the current acceleration parameter; and
a control module 404, configured to control drive torque outputted by an engine according to the target acceleration parameter.

Optionally, the corresponding relation between the braking parameter and the acceleration coefficient, comprises:
the acceleration coefficient is 1 when the braking parameter is less than or equal to a first preset braking threshold value;
the acceleration coefficient and the braking parameter are in a negative correlation when the braking parameter is greater than the first preset braking threshold value and less than a second preset braking threshold value, wherein the first preset braking threshold value is less than the second preset braking threshold value; and
the acceleration coefficient is 0 when the braking parameter is greater than or equal to the second preset braking threshold value.

Optionally, the acquiring module 401 further comprises:
a first acquiring module, configured to acquire the current acceleration parameter and the current braking parameter;
a first searching module, configured to determine a current driving state according to the current acceleration parameter and the current braking parameter; and
a second acquiring module, configured to acquire the current braking mode corresponding to the current driving state according to the current driving state.

Optionally, the acceleration parameter comprises at least one of an acceleration pedal opening degree and an engine rotating speed; and
the braking parameter comprises at least one of a brake pedal opening degree and a brake master cylinder pressure value.

Optionally, the generating module 403 comprises:
a first generating module, configured to generate the target acceleration parameter according to a product of the target acceleration coefficient and the current acceleration parameter.

Based on the above, according to the braking control system provided by the embodiment of the invention, as the corresponding relation between the braking parameter and the acceleration coefficient is preset in the braking mode, the target acceleration coefficient corresponding to the current braking parameter may be determined according to the current braking mode; and the target acceleration parameter is generated according to the target acceleration coefficient and the current acceleration parameter, the drive torque outputted by the engine is controlled according to the target acceleration coefficient and the current acceleration parameter, and the drive torque outputted by the engine may be controlled according to the current braking mode and the braking parameter, which prevents the problem of poor driving experience caused by sudden power interruption brought by the direct clearing of the drive torque outputted by the engine after a brake pedal is stepped on or jammed on, thereby effectively improving the driving experience.

In addition, the description further discloses a vehicle, comprising the above braking control system.

The apparatus embodiment described above is only schematic, wherein units illustrated as separating components may be or may not be physically separated, and components displayed as units may be or may not be physical units, may be located in one place, or may be distributed on a plurality of network units. Part or all of modules may be selected according to actual requirements to achieve one of the objectives of the solution of the embodiment. Those ordinarily skilled in the art can understand and implement the embodiment without involving creative labor.

All component embodiments of the invention may be achieved through hardware, or achieved through software modules operating on one or more processors, or achieved through their combinations. Those skilled in the art shall understand that some or all of functions of some or all of components in a computing device according to an embodiment of the invention may be achieved through a microprocessor or a digital signal processor (DSP) in practice. The invention further can achieve part or all of device or apparatus programs (such as computer programs and computer program products) for executing the method described here. The programs for achieving the invention can be stored on a computer readable medium, or can have the form of one or more signals. The signals may be downloaded from Internet sites, or provided on carrier signals, or provided in any other forms.

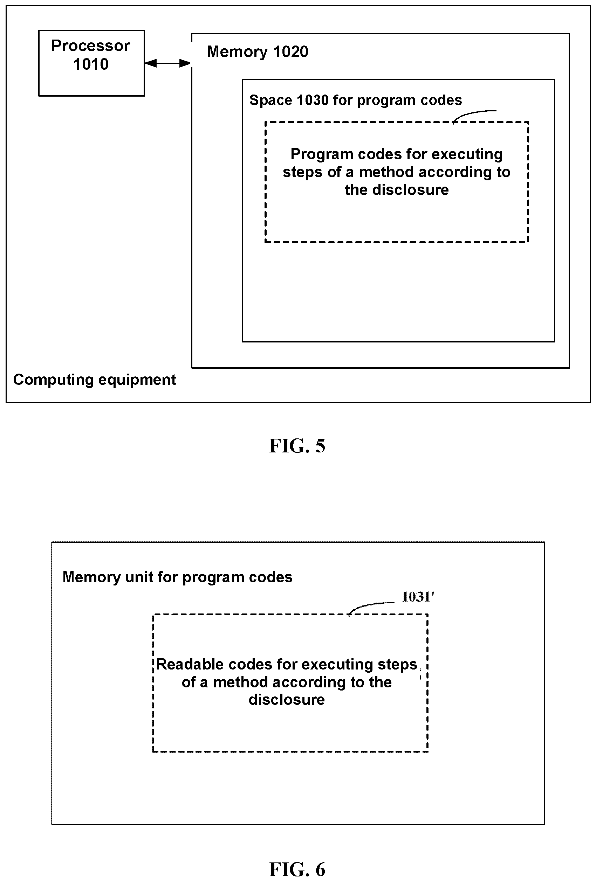

For example, FIG. 5 shows a computing device capable of achieving the method according to the invention. The computing device traditionally comprises a processor 1010 and a computer program product or a computer readable medium in the form of a memory 1020. The memory 1020 may be an electronic memory such as a flash memory, an electrically erasable programmable read-only memory (EEPROM), an electrically programmable read-only memory (EPROM), a hard disk or a read-only memory (ROM). The memory 1020 has a memory space 1030 for program codes 1031 for executing any method steps in the above method. For example, the memory space 1030 for the program codes can comprise all the program codes 1031 for achieving all the steps in the above method respectively. The program codes may be read out from one or more computer program products or written in the one or more computer program products. The computer program products comprise program code carriers such as a hard disk, a compact disk (CD), a memory card or a soft disk. The computer program products usually are portable or fixed memory units referring to FIG.6. The memory units may have memory sections, memory spaces, etc. disposed just like the memory 1020 in the computing device in FIG. 5. The program codes may be compressed in a proper form for example. Usually, the memory units comprise computer readable codes 103F that may be codes capable of being read by processors such as the processor 1010, and when the codes operate on the computing device, the computing device executes all the steps in the method described above.

"One embodiment", "embodiments" or "one or more embodiments" in the text mean that specific features, structures or characteristics described with reference to the embodiments are contained in at least one embodiment of the invention. In addition, please pay attention to the situation that word examples of "in one embodiment" do not necessarily refer to the same embodiment.

A large quantity of specific details are illustrated in the specification provided here. However, it is understandable that the embodiments of the invention can be implemented without these specific details. In some examples, known methods, structures and technologies are not shown in detail, so that understanding of the specification is not fuzzy.

In the claims, any reference symbols located between brackets shall not limit the claims. The work "contain" does not exclude the existence of elements or steps not listed in the claims. "An" or "one" located before each element does not exclude the existence of a plurality of these elements. The invention can be achieved through hardware comprising a plurality of different elements and a properly programmed computer. In the unit claims listing a plurality of apparatuses, the plurality of apparatuses may be specifically reflected through the same hardware item. Words of "First", "second", "Third", etc. are used without representing any sequence. These words can be explained as names.

## Claims

1. A method for braking control, applied to a vehicle, the method comprising the following steps:
acquiring (101, 301) a current acceleration parameter, a current braking parameter and a current braking mode, wherein a corresponding relation between a braking parameter and an acceleration coefficient is preset in a braking mode;
determining (102, 304) a target acceleration coefficient corresponding to the current braking parameter according to the current braking mode;
generating (103, 305) a target acceleration parameter according to the target acceleration coefficient and the current acceleration parameter; and
controlling (104, 306) drive torque outputted by an engine of the vehicle according to the target acceleration parameter, wherein the corresponding relation between the braking parameter and the acceleration coefficient, comprises:
the acceleration coefficient is 1 when the braking parameter is less than or equal to a first preset braking threshold value;
the acceleration coefficient and the braking parameter are in a negative correlation when the braking parameter is greater than the first preset braking threshold value and less than a second preset braking threshold value, wherein the first preset braking threshold value is less than the second preset braking threshold value; and
the acceleration coefficient is 0 when the braking parameter is greater than or equal to the second preset braking threshold value.

2. The method according to claim 1, wherein the step of acquiring the current acceleration parameter, the current braking parameter and the current braking mode, comprises:
acquiring the current acceleration parameter and the current braking parameter;
determining a current driving state according to the current acceleration parameter and the current braking parameter; and
acquiring the current braking mode corresponding to the current driving state.

3. The method according to claim 1, wherein the acceleration parameter comprises at least one of an acceleration pedal opening degree and an engine rotating speed; and
the braking parameter comprises at least one of a brake pedal opening degree and a brake master cylinder pressure value.

4. The method according to claim 1, wherein the step of generating the target acceleration parameter according to the target acceleration coefficient and the current acceleration parameter, comprises:
generating the target acceleration parameter according to the product of the target acceleration coefficient and the current acceleration parameter.

5. A braking control system, comprising:
an acquiring module (401), configured to acquire a current acceleration parameter, a current braking parameter and a current braking mode, wherein the corresponding relation between a braking parameter and an acceleration coefficient is preset in a braking mode;
a searching module (402), configured to determine a target acceleration coefficient corresponding to the current braking parameter according to the current braking mode;
a generating module (403), configured to generate a target acceleration parameter according to the target acceleration coefficient and the current acceleration parameter; and
a control module (404), configured to control drive torque outputted by an engine of the vehicle according to the target acceleration parameter, wherein the corresponding relation between the braking parameter and the acceleration coefficient, comprises:
the acceleration coefficient is 1 when the braking parameter is less than or equal to a first preset braking threshold value;
the acceleration coefficient and the braking parameter are in a negative correlation when the braking parameter is greater than the first preset braking threshold value and less than a second preset braking threshold value, wherein the first preset braking threshold value is less than the second preset braking threshold value; and
the acceleration coefficient is 0 when the braking parameter is greater than or equal to the second preset braking threshold value.

6. The system according to claim 5, wherein the acquiring module comprises:
a first acquiring module, configured to acquire the current acceleration parameter and the current braking parameter;
a first searching module, configured to determine a current driving state according to the current acceleration parameter and the current braking parameter; and
a second acquiring module, configured to acquire the current braking mode corresponding to the current driving state according to the current driving state.

7. The system according to claim 5, wherein the acceleration parameter comprises at least one of an acceleration pedal opening degree and an engine rotating speed; and the braking parameter comprises at least one of a brake pedal opening degree and a brake master cylinder pressure value.

8. A vehicle, comprising: the braking control system according to any one of claims 5-7.

9. A computer program, comprising computer readable codes, wherein when the computer readable codes operate on a computing device, the computing device executes the braking control method according to any one of the claims 1-4.

10. A computer readable medium, storing the computer program as claimed in claim 9.

## Patentansprüche

1. Bremssteuerungsverfahren, angewandt auf ein Fahrzeug, wobei das Verfahren die folgenden Schritte aufweist:
Erfassen (101, 301) eines aktuellen Beschleunigungsparameters, eines aktuellen Bremsparameters und eines aktuellen Bremsmodus, wobei eine entsprechende Beziehung zwischen einem Bremsparameters und einem Beschleunigungskoeffizient in einem Bremsmodus voreingestellt ist;
Ermitteln (102, 304) eines dem aktuellen Bremsparameter entsprechenden Ziel-Beschleunigungswerts gemäß dem aktuellen Bremsmodus;
Erzeugen (103, 305) eines Ziel-Beschleunigungsparameters gemäß dem Ziel-Beschleunigungskoeffizienten und dem aktuellen Beschleunigungsparameter; und
Steuern (104, 306) des von einem Motor des Fahrzeugs ausgegebenen Antriebsdrehmoments gemäß dem Ziel-Beschleunigungsparameter, wobei die entsprechende Beziehung zwischen dem Bremsparameter und dem Beschleunigungskoeffizient aufweist;
der Beschleunigungskoeffizient beträgt 1, wenn der Bremsparameter geringer als oder gleich einem ersten voreingestellten Bremsschwellenwert ist;
der Beschleunigungskoeffizient und der Bremsparameter eine negative Korrelation aufweisen, wenn der Bremsparameter größer als der erste voreingestellte Bremsschwellenwert und geringer als ein zweiter voreingestellter Bremsschwellenwert ist, wobei der erste voreingestellte Bremsschwellenwert geringer als der zweite voreingestellte Bremsschwellenwert ist; und
der Beschleunigungskoeffizient 0 beträgt, wenn der Bremsparameter größer als oder gleich dem zweiten voreingestellten Bremsschwellenwert ist.

2. Verfahren nach Anspruch 1, bei welchem der Schritt des Erfassens des aktuellen Beschleunigungsparameters, des aktuellen Bremsparameters und des aktuellen Bremsmodus die folgenden Schritte aufweist:
Erfassen des aktuellen Beschleunigungsparameters und des aktuellen Bremsparameters;
Ermitteln eines aktuellen Fahrzustands gemäß dem aktuellen Beschleunigungsparameter und dem aktuellen Bremsparameter; und
Erfassen des dem aktuellen Fahrzustand entsprechenden aktuellen Bremsmodus.

3. Verfahren nach Anspruch 1, bei welchem der Beschleunigungsparameter einen Gaspedalöffnungsgrad und/oder eine Motordrehzahl aufweist; und der Bremsparameter einen Bremspedalöffnungsgrad und/oder ein Hauptbremszylinderdruckwert aufweist.

4. Verfahren gemäß Anspruch 1, bei welchem der Schritt des Erzeugens des Ziel-Beschleunigungsparameters gemäß dem Ziel-Beschleunigungskoeffizienten und dem aktuellen Beschleunigungsparameter den folgenden Schritt aufweist:
Erzeugen des Ziel-Beschleunigungsparameters gemäß dem Produkt des Ziel-Beschleunigungskoeffizients und des aktuellen Beschleunigungsparameters.

5. Bremssteuersystem mit:
einem Erfassungsmodul (401), das zum Erfassen eines aktuellen Beschleunigungsparameters, eines aktuellen Bremsparameters und eines aktuellen Bremsmodus ausgebildet ist, wobei eine entsprechende Beziehung zwischen einem Bremsparameters und einem Beschleunigungskoeffizient in einem Bremsmodus voreingestellt ist;
einem Suchmodul (402), das zum Ermitteln eines dem aktuellen Bremsparameter entsprechenden Ziel-Beschleunigungswerts gemäß dem aktuellen Bremsmodus ausgebildet ist;
einem Erzeugungsmodul (403), das zum Erzeugen eines Ziel-Beschleunigungsparameters gemäß dem Ziel-Beschleunigungskoeffizienten und dem aktuellen Beschleunigungsparameter ausgebildet ist; und
einem Steuermodul (404), das zum Steuern des von einem Motor des Fahrzeugs ausgegebenen Antriebsdrehmoments gemäß dem Ziel-Beschleunigungsparameter ausgebildet ist, wobei die entsprechende Beziehung zwischen dem Bremsparameter und dem Beschleunigungskoeffizient aufweist;
der Beschleunigungskoeffizient beträgt 1, wenn der Bremsparameter geringer als oder gleich einem ersten voreingestellten Bremsschwellenwert ist;
der Beschleunigungskoeffizient und der Bremsparameter eine negative Korrelation aufweisen, wenn der Bremsparameter größer als der erste voreingestellte Bremsschwellenwert und geringer als ein zweiter voreingestellter Bremsschwellenwert ist, wobei der erste voreingestellte Bremsschwellenwert geringer als der zweite voreingestellte Bremsschwellenwert ist; und
der Beschleunigungskoeffizient 0 beträgt, wenn der Bremsparameter größer als oder gleich dem zweiten voreingestellten Bremsschwellenwert ist.

6. System nach Anspruch 5, bei welchem das Erfassungsmodul aufweist:
ein erstes Erfassungsmodul, das zum Erfassen des aktuellen Beschleunigungsparameters und des aktuellen Bremsparameters ausgebildet ist;
ein erstes Suchmodul, das zum Ermitteln eines aktuellen Fahrzustands gemäß dem aktuellen Beschleunigungsparameter und dem aktuellen Bremsparameter ausgebildet ist; und
ein zweites Erfassungsmodul, das zum Erfassen des dem aktuellen Fahrzustand entsprechenden aktuellen Bremsmodus ausgebildet ist.

7. System nach Anspruch 5, bei welchem der Beschleunigungsparameter einen Gaspedalöffnungsgrad und/oder eine Motordrehzahl aufweist; und der Bremsparameter einen Bremspedalöffnungsgrad und/oder ein Hauptbremszylinderdruckwert aufweist.

8. Fahrzeug mit dem Bremssteuersystem nach einem der Ansprüche 5-7.

9. Computerprogramm mit computerlesbaren Codes, bei welchem, wenn die computerlesbaren Codes auf einer Rechenvorrichtung ausgeführt werden, die Rechenvorrichtung das Bremssteuerverfahren nach einem der Ansprüche 1 - 4 ausführt.

10. Computerlesbares Medium, welches das Computerprogramm nach Anspruch 9 speichert.

## Revendications

1. Procédé de commande de freinage, appliqué à un véhicule, le procédé comprenant les étapes suivantes :
l'acquisition (101, 301) d'un paramètre d'accélération actuel, d'un paramètre de freinage actuel et d'un mode de freinage actuel, dans lequel une relation correspondante entre un paramètre de freinage et un coefficient d'accélération est prédéfinie dans un mode de freinage ;
la détermination (102, 304) d'un coefficient d'accélération cible correspondant au paramètre de freinage actuel en fonction du mode de freinage actuel ;
la génération (103, 305) d'un paramètre d'accélération cible en fonction du coefficient d'accélération cible et du paramètre d'accélération actuel ; et
la commande (104,306) du couple moteur produit par un moteur du véhicule en fonction du paramètre d'accélération cible, dans lequel la relation correspondante entre le paramètre de freinage et le coefficient d'accélération comprend :
le coefficient d'accélération est égal à 1 lorsque le paramètre de freinage est inférieur ou égal à une première valeur seuil de freinage prédéfinie ;
le coefficient d'accélération et le paramètre de freinage sont en corrélation négative lorsque le paramètre de freinage est supérieur à la première valeur seuil de freinage prédéfinie et inférieur à une seconde valeur seuil de freinage prédéfinie, dans lequel la première valeur seuil de freinage prédéfinie est inférieure à la seconde valeur seuil de freinage prédéfinie ; et
le coefficient d'accélération est égal à 0 lorsque le paramètre de freinage est supérieur ou égal à la seconde valeur seuil de freinage prédéfinie.

2. Procédé selon la revendication 1, dans lequel l'étape d'acquisition du paramètre d'accélération actuel, du paramètre de freinage actuel et du mode de freinage actuel, comprend :
l'acquisition du paramètre d'accélération actuel et du paramètre de freinage actuel ;
la détermination d'un état de conduite actuel en fonction du paramètre d'accélération actuel et du paramètre de freinage actuel ; et
l'acquisition du mode de freinage actuel correspondant à l'état de conduite actuel.

3. Procédé selon la revendication 1, dans lequel le paramètre d'accélération comprend au moins l'un parmi un degré d'ouverture de pédale d'accélération et une vitesse de rotation de moteur ; et
le paramètre de freinage comprend au moins l'un parmi un degré d'ouverture de pédale de frein et une valeur de pression du maître-cylindre de frein.

4. Procédé selon la revendication 1, dans lequel l'étape de génération du paramètre d'accélération cible en fonction du coefficient d'accélération cible et du paramètre d'accélération actuel comprend :
la génération du paramètre d'accélération cible en fonction du produit du coefficient d'accélération cible et du paramètre d'accélération actuel.

5. Système de commande de freinage comprenant :
un module d'acquisition (401), configuré pour acquérir un paramètre d'accélération actuel, un paramètre de freinage actuel et un mode de freinage actuel, dans lequel la relation correspondante entre un paramètre de freinage et un coefficient d'accélération est prédéfinie dans un mode de freinage ;
un module de recherche (402), configuré pour déterminer un coefficient d'accélération cible correspondant au paramètre de freinage actuel en fonction du mode de freinage actuel ;
un module de génération (403), configuré pour générer un paramètre d'accélération cible en fonction du coefficient d'accélération cible et du paramètre d'accélération actuel ; et
un module de commande (404), configuré pour commander un couple moteur produit par un moteur du véhicule en fonction du paramètre d'accélération cible, dans lequel la relation correspondante entre le paramètre de freinage et le coefficient d'accélération comprend :
le coefficient d'accélération est égal à 1 lorsque le paramètre de freinage est inférieur ou égal à une première valeur seuil de freinage prédéfinie ;
le coefficient d'accélération et le paramètre de freinage sont en corrélation négative lorsque le paramètre de freinage est supérieur à la première valeur seuil de freinage prédéfinie et inférieur à une seconde valeur seuil de freinage prédéfinie, dans lequel la première valeur seuil de freinage prédéfinie est inférieure à la seconde valeur seuil de freinage prédéfinie ; et
le coefficient d'accélération est égal à 0 lorsque le paramètre de freinage est supérieur ou égal à la seconde valeur seuil de freinage prédéfinie.

6. Dispositif selon la revendication 5, dans lequel l'acquisition de module comprend :
un premier module d'acquisition, configuré pour acquérir le paramètre d'accélération actuel et le paramètre de freinage actuel ;
un premier module de recherche, configuré pour déterminer un état de conduite actuel en fonction du paramètre d'accélération actuel et du paramètre de freinage actuel ; et
un second module d'acquisition, configuré pour acquérir le mode de freinage actuel correspondant à l'état de conduite actuel en fonction de l'état de conduite actuel.

7. Système selon la revendication 5, dans lequel le paramètre d'accélération comprend au moins l'un parmi un degré d'ouverture de pédale d'accélération et une vitesse de rotation de moteur ; et le paramètre de freinage comprend au moins l'un parmi un degré d'ouverture de pédale de frein et une valeur de pression du maître-cylindre de frein.

8. Véhicule, comprenant : le système de commande de freinage selon l'une quelconque des revendications 5 à 7.

9. Programme informatique, comprenant des codes lisibles par ordinateur, dans lequel, lorsque les codes lisibles par ordinateur fonctionnent sur un dispositif informatique, le dispositif informatique exécute le procédé de commande de freinage selon l'une quelconque des revendications 1 à 4.

10. Support lisible par ordinateur stockant le programme informatique selon la revendication 9.
